# EUROPEAN PATENT APPLICATION

(11) **EP 2 728 135 A2**
(43) Date of publication of application: **07.05.2014**
(21) Application number: 13191155.4
(22) Date of filing: 31.10.2013
(51) Int. Cl.: F01N 3/20

(54) **Ammonia flow control**

(30) Priority: 02.11.2012 US 201261722128 P; 19.04.2013 US 201313866633
(71) Applicant: International Engine Intellectual Property Company, LLC, Lisle, Illinois 60532 (US)
(72) Inventor: Lack, Adam C., Boulder, CO Colorado 80302 (US); Singh, Navtej, Arlington Heigts, 60004 (US); Miller, Michael James, Mt. Prospect, IL Illinois 60056 (US); Olenczuk, John Simon, Melrose Park, IL Illinois 60164 (US)
(74) Representative: Kuhnen & Wacker

(57) **Abstract**

A method for controlling injection of a reductant into an exhaust system (28) of an internal combustion engine includes determining the temperature and pressure of reductant supplied to a reductant injector (24). The method also determines a maximum reductant flow rate as a function of the reductant temperature and pressure and controls operation of the injector as a function of the maximum reductant flow rate.

## Description

### BACKGROUND

Selective catalytic reduction (SCR) is commonly used to remove NOₓ *(i.e.,* oxides of nitrogen) from the exhaust gas produced by internal engines, such as diesel or other lean bum (gasoline) engines. In such systems, NOₓ is continuously removed from the exhaust gas by injection of a reductant into the exhaust gas prior to entering an SCR catalyst capable of achieving a high conversion of NOₓ.

Ammonia is often used as the reductant in SCR systems. The ammonia is introduced into the exhaust gas by controlled injection either of gaseous ammonia, aqueous ammonia or indirectly as urea dissolved in water. The SCR catalyst, which is positioned in the exhaust gas stream, causes a reaction between NOₓ present in the exhaust gas and a NOₓ reducing agent (e.g., ammonia) to convert the NOₓ into nitrogen and water.

Proper operation of the SCR system involves precise control of the amount (*i.e.,* dosing level) of ammonia (or other reductant) that is injected into the exhaust gas stream. If too little reductant is used, the catalyst will convert an insufficient amount of NOₓ. If too much reductant is used, a portion of the ammonia will pass unreacted through the catalyst in a condition known as "ammonia slip." Thus, it is desirable to be able to precisely control the delivery of reductant into the exhaust system.

### SUMMARY

Aspects and embodiments of the present technology described herein relate to one or more systems and methods for controlling injection of a reductant into an exhaust system of an internal combustion engine. The exhaust system includes an SCR catalyst that reacts with the reductant to reduce NOₓ in the engine's exhaust. The method includes determining the temperature and pressure of reductant supplied to the injector, determining a maximum reductant flow rate as a function of the reductant temperature and pressure, and controlling operation of the injector as a function of the maximum reductant flow rate. In certain embodiments, the method may control operation of the injector as a function of a ratio of a desired reductant flow rate to the maximum reductant flow rate. Further, in some embodiments, the method may modulate the injector between open and closed positions at a duty cycle corresponding to the ratio of the desired reductant flow rate to the maximum reductant flow rate.

In some embodiments, the method may include determining a duty cycle based on a ratio of a desired reductant flow rate to the maximum reductant flow rate. The method may include modulating the injector between open and closed positions at the duty cycle when the duty cycle is within a preselected range. In some embodiments, the injector may be maintained at its open position when the duty cycle is above the preselected range and maintained at its closed position when the duty cycle is below the preselected range.

In certain embodiments, the reductant may be ammonia. The method may include determining the temperature and pressure of ammonia supplied to the injector, determining a maximum ammonia flow rate as a function of the ammonia temperature and pressure, determining a duty cycle based on a ratio of a desired ammonia flow rate to the maximum ammonia flow rate, and controlling operation of the ammonia injector as a function of the duty cycle.

Certain aspects of the present technology relate to a system for controlling the injection of a reductant into an exhaust system of an internal combustion engine, where the exhaust system includes an SCR catalyst and an upstream reductant injector. A temperature sensor senses the temperature of reductant supplied to the injector and produces a temperature signal responsive thereto. A pressure sensor senses the pressure of reductant supplied to the injector and produces a pressure signal responsive thereto. A controller receives the pressure and temperature signals, determines a maximum reductant flow rate as a function of the pressure and temperature signals, and controls operation of the injector as a function of the maximum reductant flow rate. In at least some embodiments, the controller may operate the injector as a function of a ratio of a desired reductant flow rate to the maximum reductant flow rate. In some embodiments, the controller may modulate the injector between open and closed positions at a duty cycle corresponding to the ratio of the desired reductant flow rate to the maximum reductant flow rate.

In some embodiments, the controller may be configured to determine a duty cycle based on a ratio of a desired reductant flow rate to the maximum reductant flow rate and modulate the injector between open and closed positions at the duty cycle when the duty cycle is within a preselected range. The controller may also be configured to maintain the injector at its open position when the duty cycle is above the preselected range and maintain the injector at its closed position when the duty cycle is below the preselected range.

### BRIEF DESCRIPTION OF THE DRAWINGS

FIG. 1 is a schematic illustration of an internal combustion engine with an exhaust gas SCR system.

FIG. 2 is flow chart of an exemplary method for controlling the introduction of reductant into the exhaust system.

FIG. 3 is a schematic illustration of control logic according to certain embodiments of the present technology.

### DETAILED DESCRIPTION

Various examples of embodiments of the present technology will be described more fully hereinafter with reference to the accompanying drawings, in which such examples of embodiments are shown. Like reference numbers refer to like elements throughout. Other embodiments of the presently described technology may, however, be in many different forms and are not limited solely to the embodiments set forth herein. Rather, these embodiments are examples representative of the present technology. Rights based on this disclosure have the full scope indicated by the claims.

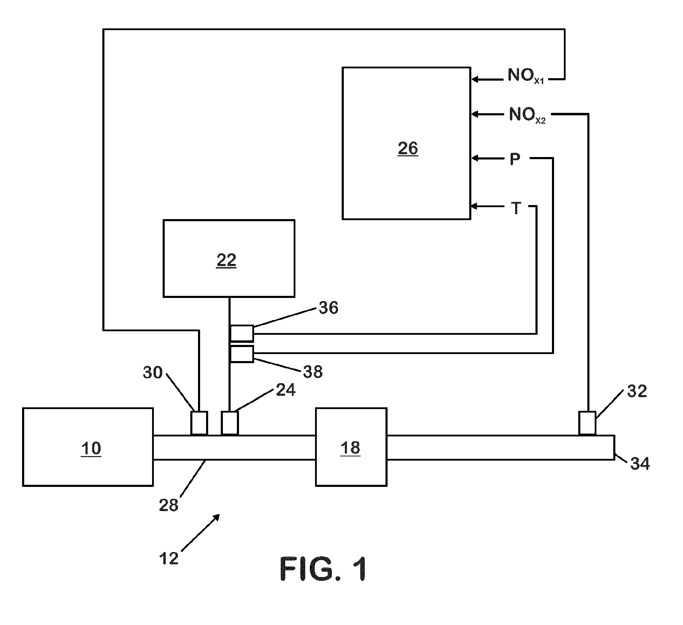

FIG. 1 shows an exemplary schematic depiction of an internal combustion engine 10 and an SCR system 12 for reducing NOₓ from the engine's exhaust. The engine 10 can be used, for example, to power a vehicle such as an over-the-road vehicle (not shown). The engine 10 can be a compression ignition engine, such as a diesel engine, for example. In the illustrated embodiment, the SCR system 12 includes a catalyst 18, a reductant supply 22, a reductant injector 24, an electronic control unit ("ECU") 26, an upstream NOₓ detector 30, a downstream NOₓ detector 32, a temperature sensor 36 and a pressure sensor 38.

The ECU 26 controls delivery of a reductant, such as ammonia, from the reductant supply 22 and into an exhaust system 28 through the reductant injector 24. The reductant supply 22 can include canisters (not shown) for storing ammonia in solid form. In most systems, a plurality of canisters will be used to provide greater travel distance between recharging. A heating jacket (not shown) is typically used around the canister to bring the solid ammonia to a sublimation temperature. Once converted to a gas, the ammonia is directed to the reductant injector 24. The reductant injector 24 is positioned in the exhaust system 28 upstream from the catalyst 18. As the ammonia is injected into the exhaust system 28, it mixes with the exhaust gas and this mixture flows through the catalyst 18. The catalyst 18 causes a reaction between NOₓ present in the exhaust gas and a NOₓ reducing agent (*e.g.,* ammonia) to reduce/convert the NOₓ into nitrogen and water, which then passes out of the tailpipe 34 and into the environment. While the SCR system 12 has been described in the context of solid ammonia, it will be appreciated that the SCR system 12 could alternatively use a reductant such as pure anhydrous ammonia, aqueous ammonia or urea, for example.

The upstream NOₓ sensor 30 is positioned to detect the level of NOₓ in the exhaust stream at a location upstream of the catalyst 18 and produce a responsive upstream NOₓ signal. As shown in FIG. 1, the upstream NOₓ sensor 30 may be positioned in the exhaust system 28 between the engine 10 and the injector 24. The downstream NOₓ sensor 32 may be positioned to detect the level of NOₓ in the exhaust stream at a location downstream of the catalyst 18 and produce a responsive downstream NOₓ signal. The temperature sensor 36 is positioned to sense the pressure of reductant supplied to the inlet of the injector 24 and produce a responsive temperature signal. The pressure sensor 38 is positioned to sense the pressure of reductant supplied to the inlet of the injector 24 and produce a responsive pressure signal.

The ECU 26 is connected to receive the upstream and downstream NOₓ signals, the pressure signal and the temperature signal from the sensors 30, 32, 36, 38. The ECU 26 may be configured to control reductant dosing from the injector 24 in response to signals from the temperature and pressure sensors 36, 38 and the NOₓ sensors 30, 32 (as well as other sensed parameters). In this regard, changes in the temperature and/or pressure being supplied to the injector 24 can affect the rate of flow through the nozzle. Accordingly, at least some embodiments of the present technology account for the effects of reductant temperature and/or pressure in controlling operation of the reductant injector 24. In some embodiments, ammonia only flows through the injector 24 when the injector is in a critical flow condition where upstream and downstream pressures are at a minimum ratio. The maximum flow rate possible through the injector 24 will vary as a function of the reductant temperature and pressure. The maximum flow rate at a given temperature and pressure combination can be empirically determined (*e.g.,* by calculations or measurements) and mapped or stored in a look-up table, for example. The reductant injector 24 may be in the form of an on/off valve. According to certain embodiments, the ECU 26 determines the maximum ammonia flow rate as a function of the reductant temperature and pressure. For example, the ECU 26 may read the temperature and pressure signals from the sensors 36 and 38 and use these values to determine a maximum flow rate Flow_Max from a look up table. In some embodiments, the ECU 26 controls injection of ammonia by modulating the injector 24 at a constant frequency where the duty cycle corresponds to a ratio of a desired ammonia flow rate Flow_Desired to the maximum ammonia flow rate Flow_Max. The desired ammonia flow rate Flow_Desired may be determined as a function of the upstream and/or downstream NOₓ signals, for example.

In addition to controlling the dosing or metering of ammonia, the ECU 26 can also store information such as the amount of ammonia being delivered, the canister providing the ammonia, the starting volume of deliverable ammonia in the canister, and other such data which may be relevant to determining the amount of deliverable ammonia in each canister. The information may be monitored on a periodic or continuous basis. When the ECU 26 determines that the amount of deliverable ammonia is below a predetermined level, a status indicator (not shown) electronically connected to the controller 26 can be activated.

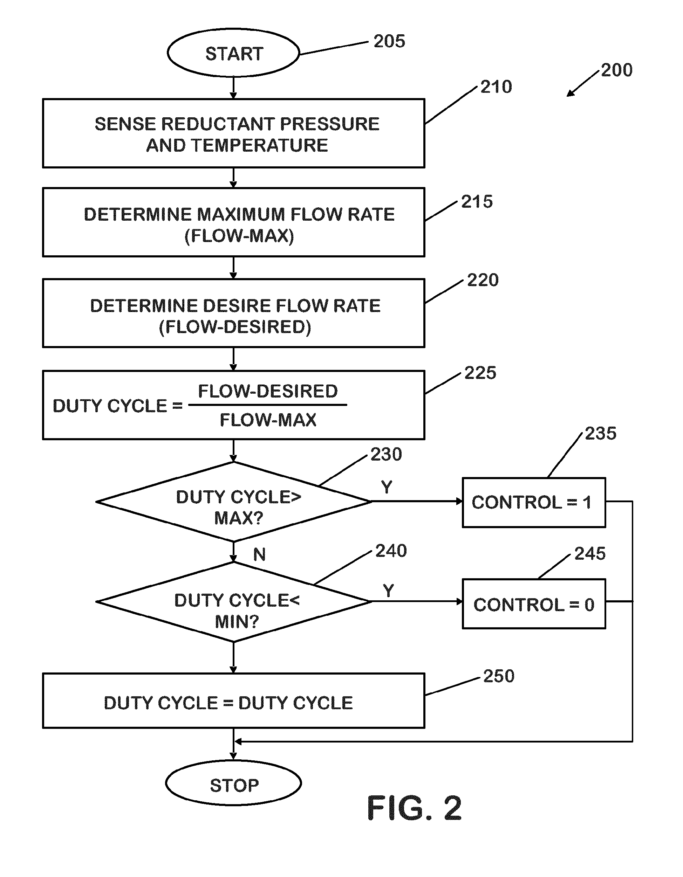

FIG. 2 is a flow chart of an exemplary method 200 according to certain aspects of the present technology. The method 200 begins in step 205. Control is then passed to step 210 where the method determines the temperature T and pressure P of reductant being supplied to the injector 24. In the illustrated embodiment, the method 200 determines the reductant temperature T by reading the output of the temperature sensor 36, which is located proximate to the inlet of the injector 24. Likewise, the method 200 determines the reductant pressure P by reading the output of the pressure sensor 38, which is located proximate to the inlet of the injector 24.

Control is then passed to step 215, where the method determines a maximum reductant flow rate Flow_Max as a function of the reductant temperature T and pressure P. As noted above, the maximum reductant flow rate Flow_Max corresponds to the maximum flow rate that is possible through the orifice of the injector 24 at a given pressure and temperature combination. The maximum flow rate can be determined, for example, by accessing a map or table that provides a maximum flow rate as a function of pressure and temperature.

Control is then passed to step 220, where the method 200 determines a desired flow rate Flow_Desired corresponding to the desired ammonia dosing level. The desired flow rate may be determined according to a variety of different control strategies and the specific method that is used is not critical to the present technology. For example, in some embodiments, the desired flow rate Flow_Desired may be calculated as a function of the upstream and/or downstream NOₓ signals.

Control is then passed to step 225, where a duty cycle is determined as a function of the ratio of the desired flow rate Flow_Desired to the maximum flow rate Flow_Max.

Next, in step 230, the duty cycle is compared to a maximum value. If the duty cycle exceeds the maximum value, control is passed to step 235 where a control value is set to 1. The control value is the duty cycle value that is applied for controlling the injector. Accordingly, when the duty cycle exceeds the maximum value, the control is set to 1 (e.g., a duty cycle of 100%), which causes the reductant injector to remain open.

Conversely, if the duty cycle does not exceed the maximum value, control is passed to step 240 where duty cycle is compared to a minimum value. If the duty cycle is below the minimum value, control is passed to step 245 where the control value is set to 0 (e.g., a duty cycle of 0%), which causes the reductant injector 24 to remain closed.

If, in step 240, the duty cycle does not fall below the minimum value, control is passed to step 250 where the control value is set to correspond to the duty cycle as determined in step 225. Accordingly, when the duty cycle falls between the maximum and minimum values, the duty cycle from step 225 will be used to control operation of the reductant injector.

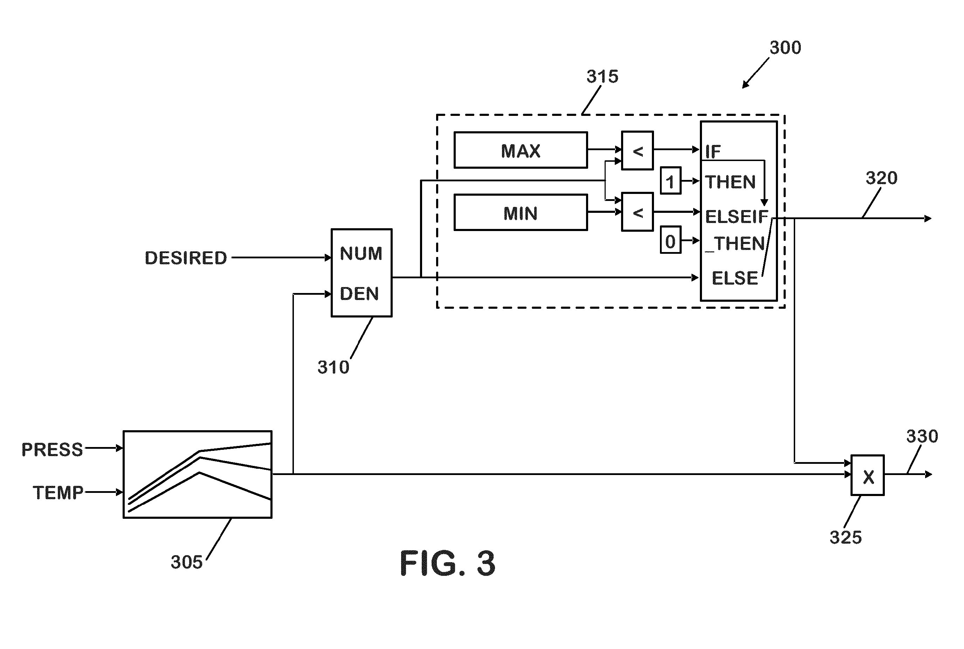

FIG. 3 is a schematic illustration of control logic 300 according to certain embodiments of the present technology. The control logic 300 may include a logic block 305 that determines a maximum reductant flow rate Flow_Max as a function of the reductant temperature T and pressure P. The maximum reductant flow rate Flow_Max corresponds to the maximum flow rate that is possible through the orifice of the injector at a given reductant pressure and temperature combination.

The output of logic block 305 is applied to one input of a logic block 310. A desired ammonia flow rate Flow_Desired is applied to the other input of logic block 305. The desired flow rate Flow_Desired may be determined according to a variety of different control strategies and the specific method that is used is not critical to the present technology. For example, in some embodiments, the desired flow rate Flow_Desired may be calculated as a function of the upstream and/or downstream NOₓ signals.

Logic block 310 outputs a Duty Cycle value that corresponds to the ratio of the desired flow rate Flow_Desired to the maximum flow rate Flow_Max.
The Duty Cycle value from logic block 310 is supplied to a logic block 315. Logic block 315 determines if the Duty Cycle value is within a predetermined range. In particular, if the Duty Cycle value exceeds a predetermined maximum value, logic block 315 sets a control value to 1. The control value is provided on an output 320 and is the duty cycle that is used to modulate the injector 24. Accordingly, when the duty cycle exceeds the maximum value, the control value is set to 1 (e.g., a duty cycle of 100%), which causes the reductant injector to remain open. Conversely, if the Duty Cycle is below a predetermined minimum value, the control value is set to 0 (e.g., a duty cycle of 0%), which causes the reductant injector 24 to remain closed. When the Duty Cycle value from block 310 falls within the predetermined range (as defined by the minimum and maximum values), control block 315 outputs the Duty Cycle value on output 320 for use in control operation of the reductant injector 24.

While this disclosure has been described as having exemplary embodiments, this application is intended to cover any variations, uses, or adaptations using the general principles set forth herein. It is envisioned that those skilled in the art may devise various modifications and equivalents without departing from the spirit and scope of the disclosure as recited in the following claims. Further, this application is intended to cover such departures from the present disclosure as come within the known or customary practice within the art to which it pertains.

## Claims

1. A method of controlling the injection of a reductant into an exhaust system of an internal combustion engine, the exhaust system including an SCR catalyst and a reductant injector for delivering reductant into the engine's exhaust upstream of the catalyst, the method comprising;
determining the temperature and pressure of reductant supplied to the injector;
determining a maximum reductant flow rate as a function of the reductant temperature and pressure; and
controlling operation of the injector as a function of the maximum reductant flow rate.

2. A method as set forth in claim 1, further comprising controlling operation of the injector as a function of a ratio of a desired reductant flow rate to the maximum reductant flow rate.

3. A method as set forth in claim 2, further comprising modulating the injector between open and closed positions at a duty cycle corresponding to the ratio of the desired reductant flow rate to the maximum reductant flow rate.

4. A method as set forth in claim 1, further comprising determining a duty cycle based on a ratio of a desired reductant flow rate to the maximum reductant flow rate, and modulating the injector between open and closed positions at the duty cycle when the duty cycle is within a preselected range.

5. A method as set forth in claim 4, further comprising maintaining the injector at its open position when the duty cycle is above the preselected range.

6. A method as set forth in claim 4, further comprising maintaining the injector at its closed position when the duty cycle is below the preselected range.

7. A method as set forth in claim 1, wherein the reductant is ammonia.

8. A method of controlling the injection of ammonia into an exhaust system of an internal combustion engine, the exhaust system including an SCR catalyst and an ammonia injector for delivering ammonia into the engine's exhaust upstream of the catalyst, the method comprising;
determining the temperature and pressure of ammonia supplied to the injector;
determining a maximum ammonia flow rate as a function of the ammonia temperature and pressure;
determining a duty cycle based on a ratio of a desired ammonia flow rate to the maximum ammonia flow rate; and
controlling operation of the ammonia injector as a function of the duty cycle.

9. A method as set forth in claim 8, further comprising:
modulating the injector between open and closed positions at the duty cycle when the duty cycle is within a preselected range;
maintaining the injector at its open position when the duty cycle is above the preselected range; and
maintaining the injector at its closed position when the duty cycle is below the preselected range.

10. A system for controlling the injection of a reductant into an exhaust system of an internal combustion engine, the exhaust system including an SCR catalyst and a reductant injector for delivering reductant into the engine's exhaust upstream of the catalyst, the system comprising;
a temperature sensor configured to sense the temperature of reductant supplied to the injector and produce a temperature signal responsive thereto;
a pressure sensor configured to sense the pressure of reductant supplied to the injector and produce a pressure signal responsive thereto;
a controller configured to receive the pressure and temperature signals, determine a maximum reductant flow rate as a function of the pressure and temperatures signals and control operation of the injector as a function of the maximum reductant flow rate.

11. A system as set forth in claim 10, wherein the controller is configured to control operation of the injector as a function of a ratio of a desired reductant flow rate to the maximum reductant flow rate.

12. A system as set forth in claim 11, wherein the controller is configured to modulate the injector between open and closed positions at a duty cycle corresponding to the ratio of the desired reductant flow rate to the maximum reductant flow rate.

13. A system as set forth in claim 10, wherein the controller is configured to determine a duty cycle based on a ratio of a desired reductant flow rate to the maximum reductant flow rate, and modulating the injector between open and closed positions at the duty cycle when the duty cycle is within a preselected range.

14. A system as set forth in claim 13, wherein the controller is configured to further:
maintain the injector at its open position when the duty cycle is above the preselected range; and
maintain the injector at its closed position when the duty cycle is below the preselected range.
